# EUROPEAN PATENT SPECIFICATION

(11) **EP 0 712 531 B1**
(45) Date of publication and mention of the grant of the patent: **06.09.2000**
(21) Application number: 95918134.8
(22) Date of filing: 01.06.1995
(51) Int. Cl.: G11B 23/00, G11B 7/24, G11B 7/26

(54) **RECORDING MASTER, AND OPTICALLY-READABLE DATA CARRIER DERIVED THEREFROM**
AUFZEICHNUNGS-MUTTERMEDIUM UND DAVON ABGELEITETER OPTISCH LESBARE DATENTRÄGER
ENREGISTREMENT ORIGINAL ET SUPPORT DE DONNEES LISIBLES OPTIQUEMENT OBTENU A PARTIR DE CELUI-CI

(30) Priority: 08.06.1994 EP 94201626
(43) Date of publication of application: 22.05.1996
(73) Proprietor: Koninklijke Philips Electronics N.V., 5621 BA Eindhoven (NL)
(72) Inventor: PUT, Paul, Louis, Marie, NL-5621 BA Eindhoven (NL); MORTON, Robert, Duncan, NL-5621 BA Eindhoven (NL); KRAAKMAN, Paulus, Antonius, NL-5621 BA Eindhoven (NL)
(74) Representative: Stolk, Steven Adolph
(86) International application number: IB9500423
(87) International publication number: WO9534894

(56) References cited:
- EP-A- 0 130 026
- EP-A- 0 168 763
- EP-A- 0 561 079
- EP-A- 0 561 080

## Description

The invention relates to a method according to the preamble of Claim 1.

The invention also relates to a recording master manufactured using such a method.

The invention further relates to a novel optically-readable data carrier derived from such a recording master.

A method as hereabove described is elucidated in the publication "Polymers in Information Storage Technology", Plenum Press, New York (1989), ISBN 0-306-43390-7, in particular in the contribution by P.E.J. Legierse and J.H.T. Pasman, pp 155-172. In the method therein discussed, the employed layer of photosensitive material is deposited directly onto a surface of a glass substrate, and is then selectively irradiated with a focused laser beam at the side of the photosensitive layer remote from the substrate.

The layer of photosensitive material (photoresist) comprises, for example, an alkaline-soluble polymer (such as novolak) which is rendered insoluble by a light-sensitive dissolution inhibitor (such as O-naphthoquinonediazide). When locally irradiated with photons (preferably at ultra-violet or blue wavelengths), this light-sensitive component undergoes local decomposition into an alkaline-soluble reaction product (in this case, 3-indenecarboxylic acid). Locally irradiated regions can thus be dissolved in alkaline solution, causing formation of localised depressions in the photosensitive layer (the so-called development process). Irradiation with a sharply focused laser beam (from, for example, an Ar-ion or He-Cd laser) can result in final depressions with relatively small in-plane widths. For example, data-bit depressions in Compact Disc (CD) masters are typically embodied as elongated pits having a width of about 500 nm, a depth of about 150 nm, and variable length.

Furthermore such a method is known from the European patent application EP-A 0 130 036. Herein a recording medium of the Direct Read After Write (DRAW) type is disclosed, where the photosensitive layer is thermally decomposable or exothermic. Irradiating locally with an illuminating writing beam results in local ablations. An electrical conductive reflecting layer is provided between the photosensitive layer and a substrate layer. This reflective layer is mainly responsible for the generation of a standing wave within the layers causing an unequal distribution of absorbed energy within the photosensitive layer. By choosing the thickness and transmissitivity of the energy absorbing material, a more equal distribution of the absorbed energy is achieved. Leading to less debris and a thin layer with a sufficient high playback contrast. According to an embodiment a dielectric layer is provided between the photosensitive layer and a reflective layer. This layer is chosen in such a way that antinodes or maximums of the standing wave occur near both boundaries of the photosensitive layer.

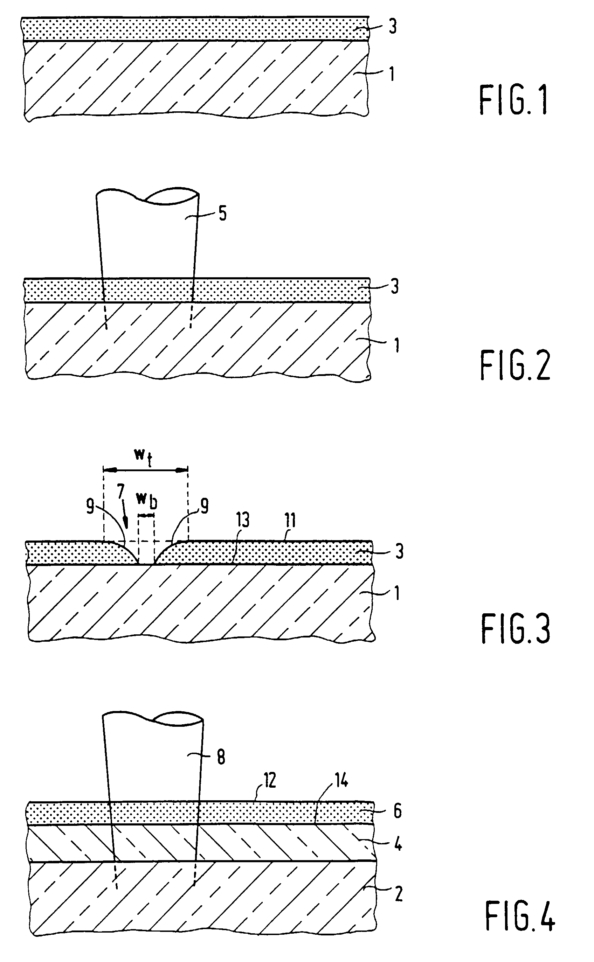

An inherent problem in this known method concerns the geometrical form of the localised depressions resulting from the development procedure. Suppose, for example, that a focused laser beam is used to project a small circular light-spot onto the surface of the photosensitive layer. As a result of well-known diffraction effects, such a spot in fact comprises a central bright disc (the so-called Airy disc) surrounded by a series of faint concentric rings. The light intensity distribution across this Airy disc is not uniform, but Gaussian. As a result, the central regions of the disc contain a much larger light dose than the outer regions. During subsequent development of the irradiated region, the rate of development at a given locality is observed to be proportional to the degree of previous irradiation of that locality. Consequently, the centre of the irradiated region develops much more rapidly than its outskirts. Penetrative development through the photosensitive layer towards the substrate therefore proceeds more rapidly at the centre of the irradiated region than at its edges, so that the depth of the resulting depression is correspondingly greater at its centre than at its outer reaches (see Figure 3, for example). In a conventionally manufactured master, the delimiting walls of such a depression are characteristically gently tapering.

Such gently tapering depression geometry is actually an undesirable occurrence in a recording master, since it negatively influences the surfacial definition and packing density of such depressions on the master surface. Ideal master depressions should have steep walls, so that their width w_{b} (in a given local direction) does not vary substantially throughout their depth; such depressions can then be disposed on the master surface with optimal surfacial density. In contrast, in the case of gradually tapering depressions having a base-width w_{b}, the depression's corresponding surfacial width wₜ will significantly exceed w_{b}, so that the maximum achievable surfacial density of such depressions within a given area will be substantially smaller than in the ideal case above. The gentler the degree of tapering, the lower will be this surfacial density.

It is an object of the invention to provide a recording master having localised surfacial depressions with relatively sharply tapering walls.

This and other objects are achieved in a method according to the characterizing part of claim 1.

The quantity Yₐ is here defined to be the arithmetic average of the local maximum intensity (Y₊) and local minimum intensity (Y₋) of the standing wave. The wavelength Λ of the standing wave is defined as the (extrapolated) separation of two consecutive local intensity maxima or intensity minima.

In the absence of a standing wave, an irradiating light beam in the (thin and transparent) photosensitive layer would have an essentially constant intensity as a function of penetration depth. In the presence of an optical standing wave, however, an intensity-modulation is superimposed upon this constant (background) intensity, so that, within a given irradiated region, the resultant light intensity is no longer independent of penetration depth. By stipulating that Yᵢ > Yₐ, the standing wave provides the boundary of the photosensitive layer nearest to the substrate with a relative surplus of light intensity, thereby increasing the degree of exposure of the lower regions of the photosensitive material. As a result, when the irradiated region is subsequently developed, the rate of penetrative development from the surface of the photosensitive layer in the direction of the substrate will be considerably increased, causing much steeper delimiting walls in the resulting localised depression.

A key insight behind the invention is that, by incorporating a dielectric film of arbitrary thickness d between the photoresist and the substrate, the phase of a standing wave occurring between the air/photoresist interface and interface I_{pd} is made variable. Appropriate adjustment of the thickness d can thus be used to advantageously change the relative position of a local maximum of the standing wave with respect to the interface I_{pd}.

The chosen thickness of the dielectric film will determine the exact interfacial value of Yᵢ in a particular situation. Optimal thicknesses for various different dielectric materials and irradiation wavelengths have been determined by the inventors using numerical calculation techniques, and subsequently experimentally investigated in mastering tests. Diffraction measurements performed on the resulting masters have verified that the wall profile of the localised depressions in the photosensitive layer becomes markedly steeper with increasing proximity of the interface I_{pd} to a local maximum of the standing wave.

If so desired, it is of course also possible to arrange the phase of the standing wave in such a way as to position a local intensity maximum at some location other than in the vicinity of the aforementioned interface I_{pd}. Such phase adjustment can be achieved by suitable variation of the thickness of the dielectric film.

It should be noted that the inventive method allows the provision of various additional layers between the substrate and the dielectric film, if required. Such additional layers may fulfil the role of, for example, diffusion barriers, adhesion improvers, *etc.* Similarly, the inventive method allows the dielectric film itself to be composite, as long as its full perpendicular extent is optically transparent at the employed irradiating wavelength.

A preferential embodiment of the method according to the invention is characterised in that the dielectric material is thus selected that its refractive index is smaller than that of the photosensitive material (at the irradiating wavelength). In such a situation, numerical calculations show that it is possible to accurately position a standing wave maximum exactly at the interface I_{pd}. On the other hand, in a situation whereby the refractive index of the dielectric film exceeds or equals that of the photosensitive layer (at the irradiating wavelength), numerical calculations reveal that a strict intensity maximum cannot be placed at the said interface, though it is possible to obtain a "near-maximum" there (with an intensity in the approximate range 70-90% of local maximum intensity).

Suitable dielectric materials for use in the inventive method include Y₂O₃, SiO₂, Al₂O₃, Si₃N₄, and fluorides such as MgF₂, BaF₂, LiF and NaF, as well as mixtures of these materials. These widely-used dielectrics are easy to apply (for example, via sputter deposition or vapour deposition, in an atmosphere of oxygen, nitrogen or fluorine), are relatively inexpensive, have good adhesive properties, and exhibit satisfactory corrosion-resistant characteristics.

Particularly satisfactory results are obtained when the inventive method is employed in conjunction with a vitreous substrate. The principal advantage of such a substrate is its transparency: employment of a non-transparent substrate will disadvantageously result in the occurrence of an interference minimum at the substrate's interface with the overlying dielectric layer, thereby complicating the task of achieving the desired standing wave maximum at the interface I_{pd}. This consideration, however, does not absolutely preclude the employment of substrate materials other than glass, *e.g.* various metals (such as Cu), oxidic compounds (such as Al₂O₃), and semi-conductors (such as Si).

The wavelength Λ of a standing wave in accordance with the invention is typically 140-160 nm (in the case of irradiation with an Ar-ion laser of wavelength 458 nm), and typical values of the ratio (Y₊ - Yₐ)/Yₐ lie approximately in the range 0.1-0.5 *(e.g.* 0.1 for a SiO₂ dielectric and 0.5 for a Si₃N₄ dielectric).

Once the inventive method has been employed to selectively endow the photosensitive layer with well-defined, sharp-walled depressions, a number of additional process steps can be enacted to produce a so-called recording matrix. More detailed information with regard to such matrices can be found in United States Patent US 4,650,735. Exemplary process steps as hereabove referred to include:
(1) Provision of the exposed face of the photosensitive layer with a thin electrically conductive film which accurately follows the topographical contours of the various depressions in the said face. Such a film must be provided by an electroless procedure (such as sputter deposition, vapour deposition or deposition from a plating solution comprising metal ions and a reducing agent), since the material of the photosensitive layer is generally not an electrical conductor. The film need only be a few nanometers thick, and can comprise materials such as Ag, Ni or TiNi;
(2) Subsequent provision of a relatively thick metallic layer on the said electrically conductive thin film. Such a metallic layer is typically (at least) several microns thick, and usually comprises Ni. Since the underlying film is electrically conductive, the metallic layer may be provided by an electrolytic procedure;
(3) Separation of the photosensitive layer from the assembly of materials provided thereon in steps (1) and (2). After separation, the newly-exposed face of the said assembly demonstrates a surfacial pattern of localised topographical elevations which is a negative image of the pattern of depressions present in the original photosensitive layer. Such a patterned assembly is referred to as a father matrix;
(4) If so desired, subsequent manufacture of a so-called mother matrix from the father matrix produced in step (3). In an exemplary procedure for producing such a mother matrix, the thin electrically conductive film originating from step (1) is first removed from the father matrix, after which the thereby newly exposed surface of the underlying metallic layer is passivated by oxidation. A relatively thick layer of Ni is then electrolytically deposited on this oxidised surface, and subsequently separated therefrom. This deposited layer of Ni will, after separation, demonstrate a surfacial pattern of localised topographical depressions which is a negative image of the pattern of elevations present in the father matrix, but a positive image of the pattern of depressions present in the original photosensitive layer.
Such processes can, if so desired, be repeated so as to obtain further matrices (so-called son matrices).

It is a further object of the invention to provide an optically-readable data carrier in which data are stored with exceptionally high resolution, being represented by very sharply-defined localised topographical variations (such as pits or bumps). Moreover, it is an object of the invention that such improved resolution may, if so desired, be accompanied by an increased surfacial packing density of the said topographical variations on the surface of the data carrier, thereby yielding increased recording density.

These and other objects are achieved according to the invention in an optically-readable data carrier comprising a substrate, a surface Sᵣ of which is provided with a slave pattern of localised topographical variations corresponding to recorded data bits, upon which surface is disposed at least a metallic reflection layer, characterised in that the said slave pattern is an impressed positive or negative image of a master pattern of localised depressions present in a recording master manufactured in accordance with the inventive method hereabove elucidated. The said substrate may comprise, for example, vitreous, metallic, or polymeric materials; polycarbonates are particularly suitable materials for this purpose.

The impressed positive or negative image referred to in the preceding paragraph can be obtained with the aid of a matrix (father, mother or son) as hereabove described. As elucidated in the above-cited article by Legierse and Pasman, in particular pp 156-157, there are several methods by which such a matrix can be used to impress a recording pattern in a layer of synthetic material, including such methods as photopolymerisation moulding, compression moulding and injection moulding. The nature of the whole mastering process is such that the excellent definition of the localised topographical variations created in the original photosensitive layer using the inventive method remains satisfactorily preserved in any subsequently manufactured matrices, and ultimately in the final data carrier itself. In this manner, the inventive method makes possible the manufacture of a novel data carrier having exceptionally high data bit resolution, with the possibility of a significantly increased data storage density. In principle, well-defined pits having an approximate width of 200-350 nm (at half-depth) and a wall-floor angle of 50-70° (at the steepest point) are attainable with the inventive techniques here discussed.

The provision of a metallic reflection layer on the surface Sᵣ allows the efficient reflection of a focused light beam therefrom. Such a light beam may impinge on the reflection layer from the side of the carrier remote from the substrate. Alternatively, in the case of a transparent substrate, the light beam may be directed at Sᵣ through the substrate itself. In both cases the light beam will, if appropriately scanned along the surface Sᵣ, encounter the various topographical variations therein. Conventionally, such variations are embodied as pits or bumps, and have a depth *(i.e.* linear dimension perpendicular to Sᵣ) of mλ/4n, where λ is the wavelength of the employed light beam, n is the refractive index of the medium from which that light impinges on the reflection layer, and m is an odd integer. Such an embodiment allows recorded information to be discriminated on the basis of well-known phase-difference effects.

The data carrier may be embodied as a disc, tape or card, either single-sided or double-sided. A double-sided carrier may, for example, be manufactured by fixing two single-sided carriers to one another, back-to-back. In the case of a disc, a so-called guide groove (servo track) may also be provided in a surface of the disc, to facilitate systematic retrieval of recorded information using a steered light beam. Such a guide groove can be impressed into the disc surface with the aid of a matrix endowed with a fine spiral pattern.

The invention and its attendant advantages will be further elucidated with the aid of exemplary embodiments and the following schematic drawings, not all of uniform scale, whereby:
Figure 1 cross-sectionally depicts part of a substrate which has been directly coated with a layer of photoresist material;
In Figure 2, the subject of Figure 1 is undergoing localised irradiation with a focused laser beam;
Figure 3 depicts the irradiated subject of Figure 2 subsequent to its development in an alkaline solution;
Figure 4 renders a partial cross-sectional view of the localised irradiation of a mastering medium suitable for use with the inventive method, which medium comprises an appropriately chosen dielectric film sandwiched between a substrate and a layer of photoresist material;
Figure 5 shows the subject of Figure 4 subsequent to its development in an alkaline solution;
Figure 6 depicts a situation similar to that shown in Figure 5, excepting that the irradiating and/or developing conditions employed in the former case were different to those employed in the latter case;
Figure 7 is a perspective view of part of a disc-shaped data carrier according to the invention, a surface of which is endowed with sharply-defined topographical variations corresponding to recorded data bits.

### Embodiment 1 (not according to the invention)

Figures 1-3 depict successive stages of a mastering process in a mastering medium which is not suitable for use with the inventive method. Identical items in the three Figures are denoted by the same reference symbols.

Figure 1 shows a glass substrate 1 which has been directly furnished with a layer 3 of photosensitive material. This layer 3 typically has a thickness in the range 60-180 nm, and comprises a mixture of novolak and 1-2 wt. % O-naphthoquinonediazide.

In Figure 2, the layer 3 is being locally irradiated with a sharply focused Ar-ion laser beam 5 (wavelength 458 nm). The employed light exposure dose typically lies in the range 1-15 mJ mm⁻², and the duration of the irradiation usually lies in the range 10ns-10µs, depending on the photosensitive material employed. Blue photon absorption in the irradiated region causes the O-naphthoquinonediazide to locally decompose into alkaline-soluble 3-indenecarboxylic acid. The layer 3 is subsequently developed, *i.e.* treated with an alkaline solution in which this carboxylic acid dissolves.

Figure 3 shows the result of this development process, whereby a depression 7 has been made in the layer 3. The walls 9 of this depression 7 are gently tapering, so that the width wₜ of the depression at the surface 11 is very much greater than the corresponding width w_{b} at the surface 13.

### Embodiment 2

Figures 4-6 depict various aspects of a mastering method according to the current invention. Identical components of the three Figures are denoted by the same reference labels.

Figure 4 shows a glass substrate 2 which has been successively furnished with a dielectric film 4 and a photosensitive layer 6. The composition and thickness of the layer 6 are identical to those of the layer 3 in Embodiment 1 above. As here depicted, layer 6 is undergoing localised irradiation with a focused laser beam 8 (identical to that employed in Embodiment 1), which also penetrates the film 4. The thickness of the layer 4 has been thus calculated and chosen that, for the particular wavelength of the irradiating beam 8, a standing wave maximum occurs at the surface 14 of the layer 6 *(i.e.* at the interface I_{pd}). As a result, this surface 14 receives a considerably greater light intensity than the surface 13 in Embodiment 1.

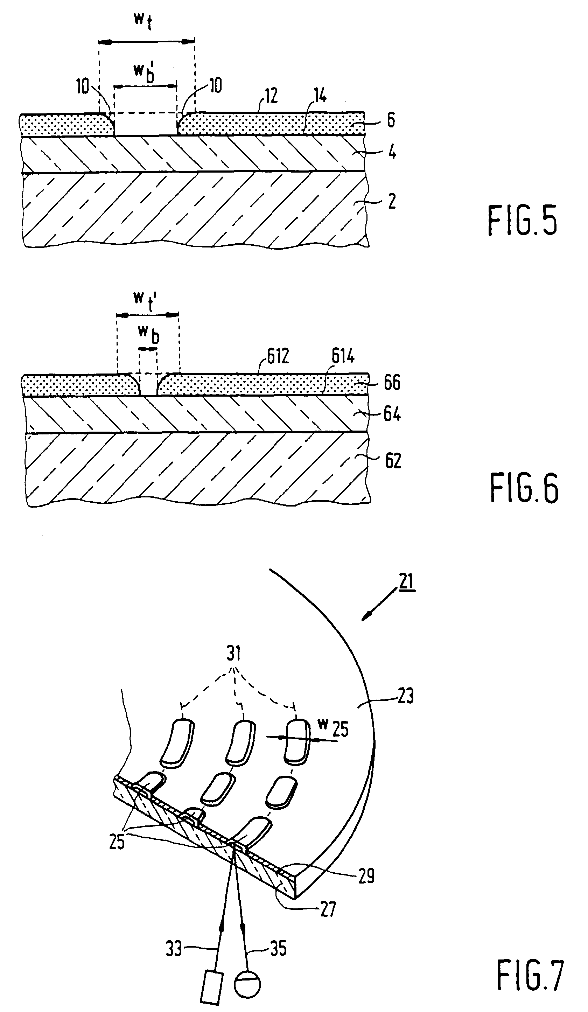

In Figure 5, the irradiated region of the layer 6 has been developed using the same procedure as described in Embodiment 1. The resulting localised depression has walls 10 which demonstrate a much sharper tapering than the walls 9 in Figure 3. As a result, the width wₜ of the depression at the surface 12 is only marginally greater than the corresponding width w_{b}' at the surface 14, in strong contrast to the corresponding situation in Figure 3. Note that the width wₜ of the depressions in Figures 3 and 5 is the same.

Figure 6 shows a similar situation to that rendered in Figure 5, excepting that the depression depicted in layer 66 (Figure 6) is narrower than that shown in layer 6 (Figure 5). Such reduced depression-width can be achieved, for example, by such measures as:
- irradiation of the layer 66 with a more narrowly focused laser beam than that depicted in Figure 4;
- employment of a shorter development time than that used to achieve the depression in layer 6;
- irradiation of the layer 66 at a lower light intensity than that employed during irradiation of layer 6,
either individually or in combination. Note that the width of the depression at the surface 614 of layer 66 (Figure 6) is now the same as the width of the depression 7 at the surface 13 of layer 3 (Figure 3), but that wₜ' in Figure 6 is significantly smaller than wₜ in Figure 3. As a result, depressions such as that shown in Figure 6 can be disposed in much greater surfacial proximity to one another than wider depressions such as that depicted in Figure 3.

### Embodiment 3

With reference to a layered medium of the type depicted in Figure 4, and with the inventive object of achieving approximately maximal standing wave intensity at the interface 14 between the photosensitive layer 6 and the dielectric film 4, the inventors have determined ideal dielectric film-thickness ranges for a number of different dielectric materials (of various refractive indices). The results are tabulated hereunder.

In all cases, the film 4 of dielectric material is situated on a glass substrate 2 having an index of refraction n_{g}. The photosensitive material of the layer 6 comprises a mixture of novolak and 1-2 wt. % O-naphthoquinonediazide, and is irradiated using an Ar-ion laser (wavelength 458 nm).

| Dielectric material | Ideal thickness range | n_{g} |
|---|---|---|
| SiO₂ | 60-80 nm or 220-240 nm | 1.52 |
| Si₃N₄ | 140-160 nm | 1.50 |
| Y₂O₃ | 140-160 nm | 1.50 |
| Fluorides^{a} | 70-90 nm or 230-250 nm | 1.50 |

| | | |
|---|---|---|
| ^{a} Such as MgF₂, BaF₂, LiF, NaF. | | |

### Embodiment 4

Figure 7 is a perspective illustration of part of a disc-shaped data carrier 21, a surface 23 of which is endowed with topographical variations 25 corresponding to recorded data bits. The carrier 21 comprises a transparent polycarbonate substrate 27 which is coated with a thin reflective Al film 29. The variations 25 are here embodied as localised elevations on the surface 23, and were created using a mother matrix manufactured in accordance with the inventive method.

The variations 25 all have a given constant width w₂₅ in the radial direction of the carrier 21, but have various in-plane lengths perpendicular to this direction. They are here arranged along essentially circular path segments 31 which together constitute a spiral guide groove (servo track). A laser beam 33 can be focused through the substrate 27 onto the film 29, and scanned along this guide groove. The height of the variations 25 perpendicular to the surface 23 is equal to λ/4n, where λ is the wavelength of the laser beam and n is the refractive index of the polycarbonate substrate 27. As a result, the phase of the reflected laser beam 35 returning from the film 29 will depend on whether the incident beam 33 impinges on one of the variations 25 or on part of the flat space in between. In this manner, it is possible to discriminate between, for example, "1" bits represented by the variations 25, and "0" bits represented by the gaps between them.

## Claims

1. A method of manufacturing a recording medium, whereby at least a layer of photosensitive material is provided on a substrate, is subsequently irradiated at selected locations with a light beam to endow it with localized depressions at the irradiated locations, wherein a film of dielectric material is disposed between the substrate and the photosensitive material, where irradiation induces an optical standing wave of average energy Ya in at least the photosensitive layer, characterized in that,
said recording medium is a master matrix adapted for subsequent manufacture of a second matrix with an inverted image of the patterns of elevations present in the master matrix,
said layer of photosensitive material is of a soluble type, adapted to form localized depressions therein after development in a development solution according to locally irradiated regions,
the phase of which wave is thus embodied by choice of the thickness of the dielectric film that its intensity Yi at the interface between the layer and the film exceeds Ya and is of the maximum or near-maximum value.

2. A method according to Claim 1, characterised in that the dielectric material is thus selected that its refractive index is smaller than that of the photosensitive material.

3. A method according to Claim 1 or 2, characterised in that the dielectric material is selected from the group comprising Y₂O₃, SiO₂, Si₃N₄, and mixtures thereof.

4. A method according to Claim 1 or 2, characterised in that the dielectric material comprises a fluoride.

5. A method according to Claim 4, characterised in that the fluoride is selected from the group formed by MgF₂, BaF₂, LiF, NaF, and mixtures thereof.

6. A method according to any of the Claims 1-5, characterised in that the selected substrate material is vitreous.

7. A recording master manufactured using a method according to any of the preceding Claims.

8. An optically-readable data carrier comprising a substrate, a surface of which is provided with a slave pattern of localised topographical variations corresponding to recorded data bits, upon which surface is disposed at least a metallic reflection layer, characterised in that the said slave pattern is an impressed positive or negative image of a master pattern of localised depressions present in a recording master according to Claim 7.

## Patentansprüche

1. Verfahren zur Herstellung eines Aufzeichnungsmediums, bei welchem zumindest eine Schicht aus photoempfindlichem Material auf einem Substrat vorgesehen und anschließend an ausgewählten Stellen mit Hilfe eines Lichtstrahls bestrahlt wird, um an den bestrahlten Stellen lokalisierte Vertiefungen vorzusehen, wobei eine Schicht aus dielektrischem Material zwischen dem Substrat und dem photoempfindlichen Material dort aufgebracht wird, wo die Bestrahlung eine optische, stehende Welle durchschnittlicher Energie Yₐ zumindest in der photoempfindlichen Schicht induziert, dadurch gekennzeichnet, dass
das Aufzeichnungsmedium durch eine Muttermatrix dargestellt ist, welche zur anschließenden Herstellung einer zweiten Matrix mit einem umgekehrten Bild der Strukturen der in der Muttermatrix vorgesehenen Erhebungen verwendbar ist,
die Schicht aus photoempfindlichen Material löslich ist und nach Entwicklung in einer Entwicklungslösung zur Ausbildung lokalisierter Vertiefungen gemäß lokal bestrahlten Bereichen einsetzbar ist,
die Phase der Welle somit durch Wahl der Dicke des dielektrischen Films dargestellt wird, dass dessen Intensität Yᵢ an der Grenzschicht zwischen der Schicht und dem Film Yₐ überschreitet und einen Maximalwert bzw. Fastmaximalwert aufweist.

2. Verfahren nach Anspruch 1, dadurch gekennzeichnet, dass das dielektrische Material so ausgewählt wird, dass dessen Brechungszahl kleiner als diese des photoempfindlichen Materials ist.

3. Verfahren nach Anspruch 1 oder 2, dadurch gekennzeichnet, dass bei dem dielektrischen Material zwischen Y₂O₃ , SiO₂ , Si₃N₄ und Gemischen aus diesen gewählt werden kann.

4. Verfahren nach Anspruch 1 oder 2, dadurch gekennzeichnet, dass das dielektrische Material Fluorid enthält.

5. Verfahren nach Anspruch 4, dadurch gekennzeichnet, dass bei dem Fluorid zwischen MgF₂, BaF₂, LiF, NaF und Gemischen aus diesen gewählt werden kann.

6. Verfahren nach einem der Ansprüche 1-5, dadurch gekennzeichnet, dass das gewählte Substrat glasartig ist.

7. Aufzeichnungs-Muttermedium, welches unter Anwendung eines Verfahrens gemäß einem der vorangegangenen Ansprüche hergestellt wird.

8. Optisch lesbarer Datenträger, welcher ein Substrat aufweist, dessen Oberfläche mit einer Slave-Struktur aus lokalisierten, topografischen Veränderungen entsprechend aufgezeichneter Datenbits versehen und auf dieser Oberfläche zumindest eine metallische Reflexionsschicht angeordnet ist, dadurch gekennzeichnet, dass die Slave-Struktur durch ein geprägtes Positiv- oder Negativbild einer Hauptstruktur aus lokalisierten Vertiefungen, welche in einem Aufzeichnungs-Muttermedium vorgesehen sind, dargestellt ist.

## Revendications

1. Procédé de fabrication d'un support d'enregistrement, dans lequel au moins une couche de matériau photosensible est appliquée sur un substrat, est ensuite irradiée à des endroits sélectionnés par un faisceau lumineux pour y former des dépressions localisées aux endroits irradiés, dans lequel un film de matériau diélectrique est disposé entre le substrat et le matériau photosensible, où l'irradiation induit une onde optique stationnaire d'une énergie moyenne Ya dans au moins la couche photosensible, caractérisé en ce que :
ledit support d'enregistrement est une matrice maîtresse adaptée à la fabrication ultérieure d'une seconde matrice avec une image inversée des motifs d'élévations présents dans la matrice maîtresse,
ladite couche de matériau photosensible est d'un type soluble qui est à même d'y former des dépressions localisées après le développement dans une solution de développement selon les régions irradiées localement,
la phase de ladite onde étant donc assurée par le choix de l'épaisseur du film diélectrique de telle sorte que son intensité Yi à l'interface entre la couche et le film dépasse Ya et ait donc une valeur maximale ou presque maximale.

2. Procédé selon la revendication 1, caractérisé en ce que le matériau diélectrique est donc sélectionné de telle sorte que son indice de réfraction soit inférieur à celui du matériau photosensible.

3. Procédé selon la revendication 1 ou 2, caractérisé en ce que le matériau diélectrique est sélectionné dans le groupe comprenant Y₂O₃, SiO₂, Si₃N₄ et leurs mélanges.

4. Procédé selon la revendication 1 ou 2, caractérisé en ce que le matériau diélectrique comprend un fluorure.

5. Procédé selon la revendication 4, caractérisé en ce que le fluorure est sélectionné dans le groupe formé de MgF₂, BaF₂, LiF, NaF et de leurs mélanges.

6. Procédé selon l'une quelconque des revendications 1 à 5, caractérisé en ce que le matériau du substrat sélectionné est vitreux.

7. Enregistrement original fabriqué en utilisant un procédé selon l'une quelconque des revendications précédentes.

8. Support de données lisibles optiquement comprenant un substrat dont une surface est pourvue d'un motif asservi de variations topographiques localisées correspondant à des bits de données enregistrés, surface sur laquelle est déposée au moins une couche métallique réfléchissante, caractérisé en ce que ledit motif asservi est une image imprimée positive ou négative d'un motif original de dépressions localisées présent dans un enregistrement original selon la revendication 7.
